# NEUE EUROPÄISCHE PATENTSCHRIFT

(11) **EP 0 728 093 B2**
(45) Veröffentlichungstag und Bekanntmachung des Hinweises auf die Entscheidung über den Einspruch: **16.11.2005**
(45) Hinweis auf die Patenterteilung: 04.02.1998
(21) Anmeldenummer: 94931588.1
(22) Anmeldetag: 08.11.1994
(51) Int. Cl.: B62K 25/08, B62K 25/28

(54) **VORRICHTUNG FÜR EINE GEFEDERTE RADFÜHRUNG AM RAHMEN EINES FAHRRADES**
DEVICE FOR SPRING-LOADED WHEEL CONTROL IN THE FRAME OF A BICYCLE
DISPOSITIF DE GUIDAGE DE ROUE A SUSPENSION SUR LE CADRE D'UNE BICYCLETTE

(30) Priorität: 09.11.1993 DE 9317132 U
(43) Veröffentlichungstag der Anmeldung: 28.08.1996
(73) Patentinhaber: HS Products Engineering GmbH, 82152 Krailling (DE)
(72) Erfinder: SPECHT, Martin, D-82340 Feldafing (DE); HAUSRATH, Udo, D-82319 Starnberg-Hadorf (DE); RÖSCH, Christoph, D-81375 München (DE); WALTER, Alexander, D-80796 München (DE); REICH, Stefan, D-81249 Neuaubing (DE)
(74) Vertreter: Nöth, Heinz
(86) Internationale Anmeldenummer: PCT/EP1994/003674
(87) Internationale Veröffentlichungsnummer: WO 1995/013207

(56) Entgegenhaltungen:
- EP-A- 0 199 188
- EP-A- 0 377 220
- EP-A- 0 507 088
- EP-A- 0 728 661
- DE-A- 3 623 567
- DE-A- 3 708 579
- DE-U- 9 407 208
- GB-A- 158 705
- GB-A- 778 815
- US-A- 423 471
- US-A- 680 048
- US-A- 1 780 034
- US-A- 5 209 319
- Zeitschrift:"Motorrad", 1984, Heft 25, Seiten 67 - 70.
- Zeitschrift:"Motorrad", 1993, Heft 4, Seiten 14, 16, 19.
- VDI Bericht Nr. 1025, 1993, Seiten 423-440.
- "Kraftfahr Technisches Handbuch" der Fa. Bosch, Auflage 1991, Seiten 5, 566, 567.
- Reimpell "Fahrwerktechnik: Grundlagen", 2. Auflage, 1988, Seiten 294, 295, 312, 313.
- Bussien: "Automobiltechnisches Handbuch", 18. Auflage, 1978, Seiten 581-584
- Borsch: "Einführung in die Motorradtechnik", Seiten 74-76.
- Broschüre BMW Bikes; Nr. 01209790610: Drucklegung 02/97.

## Beschreibung

Die Erfindung betrifft ein Fahrrad nach dem Oberbegriff des Patentanspruches 1.

Derartige Radführungen sind insbesondere bei Mountainbikes bekannt und dienen zur Verbesserung des Fahrkomforts, insbesondere auf unebener Fahrbahn.

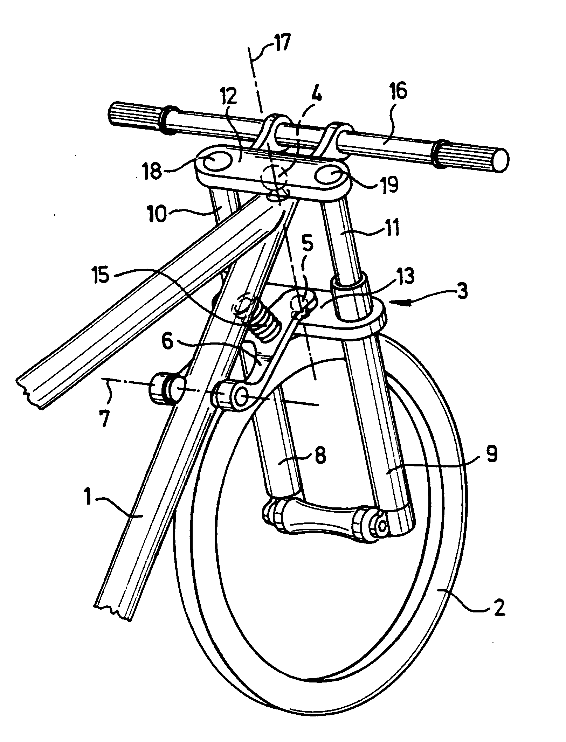

Aus der DE-A-3 708 579 (Fig. 1) ist für ein Motorrad eine Vorderradführung bekannt, bei welcher die Vorderradführung über zwei Kugelgelenke, die einen vertikalen Abstand voneinander aufweisen, mit dem Motorradrahmen verbunden ist. Das obere Kugelgelenk ist dabei an einer an der oberen Gabelbrücke befestigten und nach oben gerichteten Abkröpfung vorgesehen und das untere Kugelgelenk an einer darunter liegenden Gabelbrücke, welche zwei Tauchrohre einer Teleskopgabel miteinander verbinden. Ferner ist mit dem unteren Kugelgelenk eine am Rahmen schwenkbar gelagerte und mit einem Federelement abgestützte Schwinge verbunden. Diese Konstruktion ist als mit Nachteilen behafteter Stand der Technik beschrieben und wurde in der Praxis bei Motorrädern nicht verwirktlicht.

Aus der Zeitschrift "Motorrad", 1984, Heft 25, Seiten 67 bis 70 sind für Motorräder verschiedene mechanische Anti-Dive-Systeme bekannt, welche Bremskräfte über ein Hebelsystem an der unteren Gabelbrücke abstützen sollen. Hierdurch soll ein Gabeltauchen wirksam verhindert werden. Allerdings haben sich diese Systeme in der Praxis nicht durchgesetzt. Eines dieser bekannten Anti-Dive-Systeme zeigt eine zwischen dem Rahmen und der Teleskopgabel angeordnete Schwinge, die am Rahmen um eine zur Rahmenebene senkrechte Achse schwenkbar gelagert ist und sich an der Teleskopgabel abstützt. Für die federnde Abstützung der Schwinge am Rahmen ist ein aufwendiges Hebelsystem in Form eines Dreiecklenkers erforderlich.

Aufgabe der Erfindung ist es demgegenüber, ein Fahrrad der eingangs genannten Art zu schaffen, bei dem mit einfachen Mitteln eine Verbesserung der gefederten Vorderradführung erreicht wird.

Diese Aufgabe wird erfindungsgemäß durch die kennzeichnenden Merkmale des Patentanspruches 1 gelöst.

Die Federung für die Teleskopgabel wird durch eine federnde Abstützung der Schwinge am Rahmen, und zwar zwischen der senkrecht zur Rahmenebene verlaufenden Schwingenachse und dem ersten Gelenk erreicht. Bei dem Federelement kann es sich um eine pneumatische hydraulische Feder, oder um einen Elastomerblock mit elastischen Eigenschaften, handeln. Das Federelement hat bevorzugt auch Dämpfungsfunktion. Eine Dämpfungsfunktion kann jedoch auch durch Dämpfungselemente' z.B. Öldämpfer, zwischen den Tauchrohren und den Standrohren erreicht werden.

Die Lenkachse wird durch die beiden Gelenke gebildet und kann zwischen den beiden Teleskopgabelteilen, welche von den beiden Tauchrohren und den beiden darin geführten Standrohren bzw. -stäben gebildet wird, verlaufen.

Die beiden oberen Befestigungsstellen der beiden Teleskopgabelteile an der oberen Gabelbrücke, welche geradlinig oder leicht gebogen ausgebildet sein kann, sind starre Verbindungen der Teleskopgabelteile mit der oberen Gabelbrücke.

Anhand der Figur wird die Erfindung noch näher erläutert.

Bei dem dargestellten Ausführungsbeispiel ist ein Vorderrad 2 eines Fahrrades, von dem ein Rahmen 1 dargestellt ist, über eine Teleskopgabel 3 am Rahmen 1 gelagert. Die Teleskopgabel 3 besitzt zwei Tauchrohre 8 und 9. An den unteren Enden der beiden Tauchrohre 8 und 9 ist in bekannter Weise das Vorderrad 2 drehbar gelagert. Die beiden Tauchrohre 8 und 9 sind fest über eine Gabelbrücke 13 miteinander verbunden. Durch die Gabelbrücke 13 werden die beiden Tauchrohre 8 und 9 in einem bestimmten Abstand voneinander gehalten.

In den beiden Tauchrohren 8 und 9 sind zwei zugeordnete Standrohre 10 und 11, welche auch als Stäbe ausgebildet sein können, teleskopartig geführt. Die beiden Standrohre 10 und 11 sind über eine Gabelbrücke 12 fest miteinander verbunden. Die Gabelbrücke 12 ist im Bereich der oberen Enden der beiden Standrohre 10 und 11 mit diesen starr verbunden. An der Gabelbrücke 12 kann auch ein Lenker 16 des Fahrrades befestigt sein. Bei dem Ausführungsbeispiel sind die Standrohre 10 und 11 über die Gabelbrücke 12 mit dem Rahmen 1 gelenkig verbunden. Hierzu befindet sich an der Gabelbrücke 12 das Gelenk 4.

Von den Gelenken 4 und 5 ist bevorzugt das untere Gelenk 5 als Kugelgelenk ausgebildet. In der Figur sind beide Gelenke 4 und 5 als Kugelgelenke ausgebildet. Bei dem Ausführungsbeispiel ist am Rahmen 1 eine Schwinge 6 um eine Achse 7 schwenkbar gelagert. Die Achse 7 erstreckt sich senkrecht zur Rahmenebene bzw. parallel zur Achse des Vorderrades 2, wenn das Vorderrad 2 in Geradeausfahrt ausgerichtet ist. Die Schwinge 6 ist an den beiden Tauchrohren 8 und 9 über das Gelenk 5 und die Gabelbrücke 13 abgestützt. Das beim Ausführungsbeispiel als Kugelgelenk ausgebildete Gelenk 5, welches an der Gabelbrücke 13 vorgesehen ist, besitzt eine Kugelpfanne in der Schwinge 6 und eine an der Gabelbrücke 13 vorgesehene Gelenkkugel, die in der Kugelpfanne geführt ist. Die Schwinge 6 ist mit ihrer Kugelpfanne auf die Gelenkkugel aufgesetzt.

Bei dem Ausführungsbeispiel ist eine Feder 15 zwischen dem Rahmen 1 und der Schwinge 6 vorgesehen. Die Feder 15 kann so ausgebildet sein, daß sie die federnde Teleskopierbarkeit der Teleskopgabel 3 gewährleistet. Die Standrohre 10, 11 können zur Erhöhung der mechanischen Festigkeit tiefer in die Tauchrohre 8, 9 ragen. Es können jedoch auch zusätzlich noch Teleskopfedern vorgesehen sein. Bei der Feder 15 kann es sich um einen Elastomerblock, um eine pneumatische/hydraulische Feder handeln. Die Feder 15 hat bevorzugt auch Dämpfungseigenschaften.

Beim Ausführungsbeispiel der Figur sind für das obere Kugelgelenk die Gelenkkugel am Rahmen 1 und die Kugelpfanne des Gelenkes 4 an der Gabelbrücke 12 vorgesehen.

Beim Ausführungsbeispiel der Figur erstrecken sich die obere und untere Gabelbrücke 12 und 13 geradlinig zwischen den beiden Gabelteilen der Teleskopgabel 3. Eine Lenkachse 17 wird dabei von den beiden Gelenken 4 und 5 gebildet. Die Lenkachse 17 erstreckt sich parallel zu den beiden Teleskopgabelteilen und in der Mitte dazwischen. Befestigungsstellen 18, 19 der beiden Teleskopgabelteile (in der Figur der Standrohre 10 und 11) befinden sich an den beiden Enden der geradlinig ausgebildeten Gabelbrücke 12.

## Patentansprüche

1. Fahrrad mit einer gefederten Vorderradführung, die
eine in ihrer Länge veränderbare Teleskopgabel (3) mit zwei Tauchrohren (8, 9), an denen das Vorderrad (2) drehbar gelagert ist, und zwei in den beiden Tauchrohren (8, 9) teleskopartig geführten Standrohren (10, 11), und eine gelenkige, die Lenkachse (17) bildende Abstützung für den Rahmen (1) an der Teleskopgabel (3) aufweist, **dadurch gekennzeichnet, daß**
die Lenkachse (17) von zwei einen vertikalen Abstand voneinander aufweisenden Kugelgelenken (4, 5) gebildet ist, von denen
das erste Kugelgelenk (4) von einer Kugelpfanne, die an einer die beiden Standrohre (10, 11) miteinander verbindenden Gabelbrücke (12) vorgesehen ist, und einer am Rahmen (1) vorgesehenen Gelenkkugel gebildet ist, und
das zweite Kugelgelenk (5) an einer die beiden Tauchrohre (8, 9) miteinander verbindenden Gabelbrücke (13) gebildet ist und die beiden Tauchrohre (8, 9) mit einer Schwinge (6) gelenkig verbindet, die um eine zur Rahmenebene senkrechte Achse (7) am Rahmen (1) schwenkbar gelagert ist, und
wobei ein Federelement (15), das sich einerseits am Rahmen (1) zwischen der Schwingenachse (7) und dem ersten Kugelgelenk (4) und andererseits an der Schwinge (6) abstützt, als Elastomerblock oder als pneumatische/hydraulische Feder ausgebildet ist.

2. Fahrrad nach Anspruch 1, **dadurch gekennzeichnet, daß** die Federung der Teleskopgabel (3) allein durch das Federelement (15) gebildet ist.

## Claims

1. A bicycle with a sprung front feel mounting having
a telescopic fork (3) which is variable in its length, with two tubular sliders (8, 9) on which the front wheel (2) is rotatably mounted, and two leg tubes (10, 11) telescopically guided in the two tubular sliders (8, 9), and
a pivotal support forming the steering axis (17) for the frame (1) on the telescopic fork (3),
**characterised in that**
the steering axis (17) is formed by two ball joints (4, 5) rich are at a vertical spacing from each other and of which
the first ball joint (4) is formed by a hall socket which is provided on a fork bridge (12) connecting the two leg tubes (10, 11) together, and a pivot ball provided on the frame (1), and
the second ball joint (5) is formed on a fork bridge (13) connecting the two tubular sliders (8, 9) together and pivotably connects the two tubular sliders (8, 9) to a rocking arm (6) which is mounted to the frame (1) pivotably about an axis (7) perpendicular to the plane of the frame, and
wherein a spring element (15) which is supported on the one hand against the frame (1) between the rocking arm axis (7) and the first ball joint (4) and on the other hand against the rocking arm (6) is in the form of an elastomer block or a pneumatic/hydraulic spring.

2. A bicycle according to claim 1 **characterised in that** the springing of the telescopic fork (3) is formed solely by the spring element (15).

## Revendications

1. Bicyclette ayant un guidage à ressort de la roue avant qui présente
une fourche télescopique (3) de longueur variable comportant deux tubes plongeants (8, 9) sur lesquels la roue avant (2) est montée tournante, et deux tubes fixes (10, 11) guidés de manière téléscopique dans les deux tubes plongeants (8, 9), et
un support articulé formant l'axe de direction (17) pour le cadre (1) sur la fourche télescopique (3), **caractérisée par le fait que**
l'axe de direction (17) est formé par deux articulations sphériques (4, 5) distantes verticalement l'une de l'autre dont
la première (4) est formée d'une cuvette prévue sur un pont de fourche (12) qui réunit les deux tubes fixes (10, 11) et d'une boule prévue sur le cadre (1), et
la seconde (5) est formée sur un pont de fourche (13) réunissant les deux tubes plongeants (8, 9) et articule ceux-ci à un bras oscillant (6) qui est monté basculant sur le cadre (1) autour d'un axe (7) perpendiculaire au plan de celui-ci, et un élément élastique (15), qui s'appuie d'un côté sur le cadre (1) entre l'axe de basculement (7) et la première articulation sphérique (4) et de l'autre côté sur le bras oscillant (6), étant constitué d'un bloc d'élastomère ou d'un ressort pneumatique/hydraulique.

2. Bicyclette selon la revendication 1, **caractérisée par le fait que** la suspension élastique de la fourche télescopique (3) est formée uniquement par l'élément élastique (15).
